**Europäisches Patentamt**

**European Patent Office**

**Office européen des brevets**

(19)

(11) Veröffentlichungsnummer: **0 126 997**

**B1**

(12) # EUROPÄISCHE PATENTSCHRIFT

(45) Veröffentlichungstag der Patentschrift:
25.01.89

(21) Anmeldenummer: **84104823.4**

(22) Anmeldetag: **30.04.84**

(51) Int. Cl.⁴: **H 02 K 1/24,** H 02 K 21/08, H 02 K 41/03

(54) **Elektrischer Antrieb.**

(30) Priorität: **02.05.83 DE 3315921**
**14.07.83 DE 3325373**
**14.01.84 DE 3401163**

(43) Veröffentlichungstag der Anmeldung:
**05.12.84 Patentblatt 84/49**

(45) Bekanntmachung des Hinweises auf die Patenterteilung:
**25.01.89 Patentblatt 89/4**

(84) Benannte Vertragsstaaten:
**CH DE FR GB IT LI SE**

(56) Entgegenhaltungen:
**CH-A-447 350**
**DE-A-1 763 876**
**DE-A-3 135 924**
**DE-C-1 064 620**
**FR-A-2 490 423**
**GB-A-1 114 561**
**GB-A-1 114 562**
**US-A-3 840 763**
**US-A-4 139 790**
**US-A-4 354 126**

**Bödefeld/Sequenz "Elektrische Maschinen" 8. Aufl., Wien . New York 1971, S. 467, 468, 529, 530**

(73) Patentinhaber: **Weh, Herbert, Prof. Dr., Wöhlerstrasse 20, D-3300 Braunschweig (DE)**

(72) Erfinder: **Weh, Herbert, Prof. Dr., Wöhlerstrasse 20, D-3300 Braunschweig (DE)**
Erfinder: **May, Hardo, Gleiwitzstrasse 36, D-3300 Braunschweig (DE)**

(74) Vertreter: **Gralfs, Harro, Dipl.- Ing., Am Bürgerpark 8, D-3300 Braunschweig (DE)**

## Beschreibung

Die Erfindung bezieht sich auf elektrische Maschinen in Ausführungsformen nach den Oberbegriffen der Patentansprüche 1 bzw. 5.

Bei einer bekannten permanentmagnetisch erregten Maschine nach dem Oberbegriff des Patentanspruches 1 (DE-A-3 135 924) sind die Pole des beweglichen Teiles einstückig ausgebildet. Sie sind am Fuß der Pole mit keilförmigen Einschnitten versehen. Die Pole sind lamelliert ausgebildet, wobei die Lamellen in Achsrichtung geschichtet sind und jeweils zwischen magnetisch leitenden Lamellen in Zwischenräumen magnetisch nicht leitende Lamellen vorgesehen sind. Bei einer solchen Magnetanordnung nach dem Sammlerprinzip lassen sich hohe Flußdichten im Nutzspalt mit dem Vorteil einer günstigen Ausnutzung des permanentmagnetischen Materials erzielen. Für Permanentmagnete mit weitgehend gerader Entmagnetisierungskennlinie (im zweiten Quadranten) führt ein großer Magnetquerschnitt zu einer Magnetnutzung nahe dem Energiemaximum. Dies ist etwa bei einer Flußdichte zu erreichen, die der Hälfte der Remanenzinduktion entspricht. Ein Nachteil der bekannten Sammleranordnung besteht in hoher Ankerrückwirkung und großen Streuflußanteilen am radial inneren Ende der Pole durch die Vorteile des Sammlerprinzips.

Aufgabe der Erfindung ist eine das Magnetmaterial bestmöglich nutzende Konfiguration gemeinsam mit dem Vorteil großen magnetischen Widerstandes für unerwünschte Feldbahnen.

Diese Aurgabe wird bei einer elektrischen Maschine nach dem Oberbegriff des Patentanspruches 1 gelöst durch die in dessen Kennzeichen herausgestellten Merkmale.

Bei einer als Reluktanzmaschine ausgebildeten elektrischen Maschine nach dem Oberbegriff des Patentanspruches 5 (CH-A-447 350, GB-A-1 114 562) ist es bekannt, parallel zueinander wenigstens zwei Blechpakete mit achsparalleler Schichtung vorzusehen, die einen magnetischen Weg zwischen zwei benachbarten Polen bilden. Die beiden Blechpakete sind durch Zwischenräume getrennt, in denen sich nichtmagnetisches, elektrisch leitendes Material befindet. Diese Unterteilungen der Blechpakete durch elektrisch leitendes Material reduziert den Querfluß sowohl bei statischen als auch bei sich ändernden Flußverhältnissen und wirkt als Wirbelstromwicklung beim Anlauf.

Dabei ist weiter vorgeschlagen, zur Reduzierung des Magnetisierungsstromes und zur Verbesserung des Leistungsfaktors eine Permanenterregung für den Läufer durch Einbetten von Permanentmagneten in den nichtmagnetischen Zwischenräumen vorzusehen. Um die angestrebte magnetisierende Wirkung zu erzielen, müßten die eingebetteten Permanentmagnete einen magnetischen Fluß in Richtung der Lamellen erzeugen. Dieses ist jedoch durch eine Einbettung der Magnete in Zwischenräumen zwischen den einzelnen Pollamellen nicht erreichbar, da die Pollamellen in einer solchen Anordnung einen magnetischen Kurzschluß darstellen, der das Auftreten des Flusses im wesentlichen behindert. Die gleichen Schwierigkeiten treten auf, wenn ein Teil des vom magnetisierbaren Material eingenommenen Raums für die Unterbringung derartiger Magnete verwendet wird. Auch die in der CH-A-447 350 genannte Zielsetzung, nämlich das Erreichen eines kleinsten magnetischen Widerstandes für den von der Ständerwicklung erzeugten Magnetfluß, läßt keine andere Magnetform und Magnetisierungsrichtung als die parallel zu den Lamellen zu.

Weitere Aufgabe der Erfindung ist es, in einer als Reluktanzmaschine ausgebildeten elektrischen Maschine nach dem Oberbegriff des Patentanspruches 5 die Kompensation des Feldes der Ankerwicklung zu verbessern.

Diese Aufgabe wird gemäß der Erfindung gelöst durch die im kennzeichnenden Teil des Anspruches 5 herausgestellten Merkmale.

Zweckmäßige Ausgestaltungen der elektrischen Maschinen nach den Ansprüchen 1 und 5 sind Gegenstand der Unteransprüche 2 bis 4 bzw. 6 bis 9.

Die Erfindung ist in der Zeichnung beispielsweise veranschaulicht und im nachstehenden im einzelnen anhand der Zeichnung beschrieben.

Fig. 1     zeigt schematisch einen elektrischen Antrieb mit permanent erregtem beweglichen Teil mit Flachanordnung der Permanentmagnete.

Fig. 2     zeigt schemstisch eine elektrische Maschine mit permanent erregtem beweglichen Teil mit Permanentmagneten in Sammler-Konfiguration.

Fig. 3     zeigt ein Zeigerdiagramm.

Fig. 4     zeigt schematisch eine erste Ausführungsform einer Maschine gemäß der Erfindung mit durch Permanentmagnete erregtem beweglichen Teil.

Fig. 5     zeigt das Induktionsdiagramm der Ausführungsform nach Fig. 4.

Fig. 6     zeigt ein Polelement mit zwei Teilpolen benachbarter Pole für eine Maschine gemäß Fig. 4.

Fig. 7     zeigt eine in Anlehnung an den Stand der Technik gestaltete Ausführungsform eines als Rotor ausgebildeten beweglichen Teils einer Maschine gemäß Fig. 4.

Fig. 8     zeigt schematisch eine Ausführungsform einer Reluktanzmaschine.

Fig. 9     zeigt das Induktionsdiagramm der Maschine nach Fig. 8.

Fig. 10    zeigt eine abgewandelte Ausführungsform einer Reluktanzmaschine nach Fig. 8.

Fig. 11 zeigt das Induktionsdiagramm der Ausführungsform nach Fig. 10.

Fig. 12 zeigt eine weitere Ausführungsform einer Maschine gemäß der Erfindung mit Mischerregung.

Fig. 13 zeigt das Induktionsdiagramm der Ausführungsform nach Fig. 12.

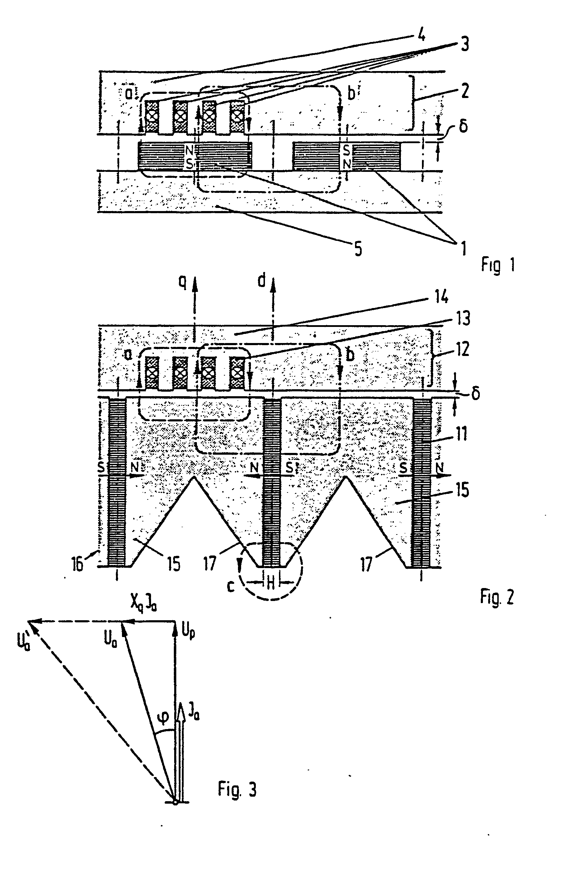

Fig. 1 zeigt die dem Nutzspalt δ in Flachanordnung direkt zugeordneten Permanentmagnete 1, einen Stator 2 mit stromführenden Nuten 3, einem Statorjoch 4 und einem Rotor- oder Translatorjoch 5. Dem von den Magneten erzeugten Feld entspricht die strichpunktiert gezeichnete Feldlinie b.

Bei der bekannten Sammler-Konfiguration nach Fig. 2 ist der Stator 12 wiederum mit stromführenden Nuten 13 in einem Statorjoch 14 ausgebildet. Der Rotor 16 trägt Pole 15, zwischen denen Permanentmagnete 11 mit abwechselnder Flußrichtung angeordnet sind. Der Magnetfluß wird in den Polen gesammelt und zum Nutzspalt umgelenkt. Zu diesem Zweck sind am Fuß der Pole keilförmige Ausschnitte 17 vorgesehen. Durch Wahl der Parameter Magnethöhe und Magnetquerschnitt kann die Magnetausnutzung jeweils im Optimum gehalten werden. Hierdurch lassen sich auf den Feldbahnen b durch den Nutzspalt δ bei gegebenem Materialaufwand für die Magnete grundsätzlich höhere Flußdichten erzielen.

Für die praktische Anwendung erweist sich jedoch als nachteilig, daß auf den Feldbahnen c an dem vom Nutzspalt abgewandten Ende der Pole verhältnismäßig große Streuflußanteile auftreten. Dies führt dazu, daß nur ein Teil des Magnetquerschnitts zur Magnetisierung des Nutzspaltes verfügbar ist. Auch an den seitlichen Stirnflächen der Magnete entstehen entsprechende Streuflüsse. Die Größe der Streuflüsse nimmt zu, wenn die Magnethöhe (in Magnetisierungsrichtung) abnimmt. Durch die mit abnehmender Magnethöhe wirksam werdenden Streuflußanteile werden die beschriebenen Dimensionierungsvorteile zum Teil abgebaut.

Ein weiterer wesentlicher Nachteil für Anordnungen nach Fig. 2 besteht darin, daß der Strom der Ankerwicklung eine starke Feldverzerrung hervorruft. Bei der Flachanordnung nach Fig. 1 wird hingegen als vorteilhaft empfunden, daß Flußdichten auf den Feldbahnen a durch den Magneten nur kleine Werte erreichen. Dies ist eine Folge der Tatsache, daß das Magnetmaterial sich für Fremdfelder ähnlich verhält wie Luft. Es kann also festgestellt werden, daß die Ankerrückwirkung eine umso geringere Feldverzerrung verursacht, je größer die Magnethöhe ist.

Für Maschinen mit großen Ankerströmen sind hohe Magnete günstig, obgleich sie im Hinblick auf die Erzeugung einer hohen Felddichte des Erregerfeldes eine unwirtschaftliche Lösung darstellen. Die praktische Anwendung der Magnetkreisgestaltung nach Fig. 2 wird jedoch durch die starke Ankerrückwirkung sehr behindert. Sie wirkt sich reduzierend auf die erzielbare Kraftdichte aus.

Eine große Feldverzerrung hat für wechselrichtergespeiste Maschinen weitere Nachteile, die anhand des Diagramms nach Fig. 3 erläutert werden. Der Feldanteil der Ankerströme der q-Achse bedingt einen großen Querspannungsteil $X_q \cdot I_a$ (gestrichelter Teil in Fig. 3). Der entsprechende Spannungsanteil ist im Diagramm senkrecht auf dem Spannungszeiger $U_p$ der Polradspannung angetragen. Entsprechend groß ist der Ankerspannungsbetrag $U_a$ im Vergleich zur Spannung $U_p$. Für die Dimensionierung des Wechselrichters ist die Spannungsvergrößerung gleichbedeutend mit einer Leistungsvergrößerung und damit der Wahl größerer Bauteile. Eine Magnetanordnung nach Fig. 1 ermöglicht dagegen ein schlankes Spannungsdiagramm mit einer kleineren Spannungskomponente des Ankerfeldes und einer entsprechend verringerten Ankerspannung $U_a$ (ausgezogener Teil des Diagramms). Erwünscht ist also eine verbesserte Magnetanordnung, die die Vorteile beider Konzepte vereinigt.

Die Magnetanordnung nach Fig. 1 zeigt keine befriedigenden Möglichkeiten für einen günstigen Einsatz des Magnetmaterials, wenn hohe Luftspalt-Flußdichten erzielt werden sollen. Eine Flußdichte von z. B. mehr als 0,6 T zwingt selbst bei Anwendung besonders hochwertiger Seltenerden-Kobaltmagneten bereits zu einer übergroßen Magnethöhe. Die Energiedichte liegt bereits jenseits des optimalen Wertes.

Für die gesuchte Lösung bei einer permanent erregten Maschine ist demnach von der Sammleranordnung nach Fig. 2 auszugehen. Um den Nachteil der großen Ankerrückwirkung auf Feldbahnen entsprechend a zu beseitigen, darf der Feldlinienverlauf b nicht durch erhöhte magnetische Widerstände gestört werden. Es muß sowohl für die luftspaltnahen wie auch für die luftspaltfernen Teile der Magnete 21 die hohe Leitfähigkeit zum Luftspalt hin gesichert bleiben.

Umgekehrt muß für Feldlinien der Form a der in Fig. 2 gezeichnete Weg über das Weicheisen der Pole unterbrochen werden. Ein erster Schritt der Vergrößerung des magnetischen Widerstandes für Feldbahnen a ist ein Spalt e in der Mitte des Pols. Dieser Spalt muß sich über die gesamte Höhe des Pols P erstrecken. Der Pol P wird also in zwei Teilpole $P_1$ und $P_2$ aufgeteilt. Um wirksam zu sein, sollte er größer als der Nutzspalt δ sein, besonders dann, wenn die Poldurchflutung der Ankerwicklung groß ist. Sollen Maschinen großer Polteilung mit großem Strombelag ausgeführt werden, zeigt sich, daß die Unterteilung der Pole durch den Spalt e allein nur begrenzt hilfreich ist. Innerhalb der Polhälften treten weiterhin erhebliche Verzerrungen auf, so daß große Unterschiede zwischen maximalen und minimalen Werten der Flußdichten entstehen. Unter Berücksichtigung der Sättigung bedeutet dies eine Verringerung der mittleren Flußdichte.

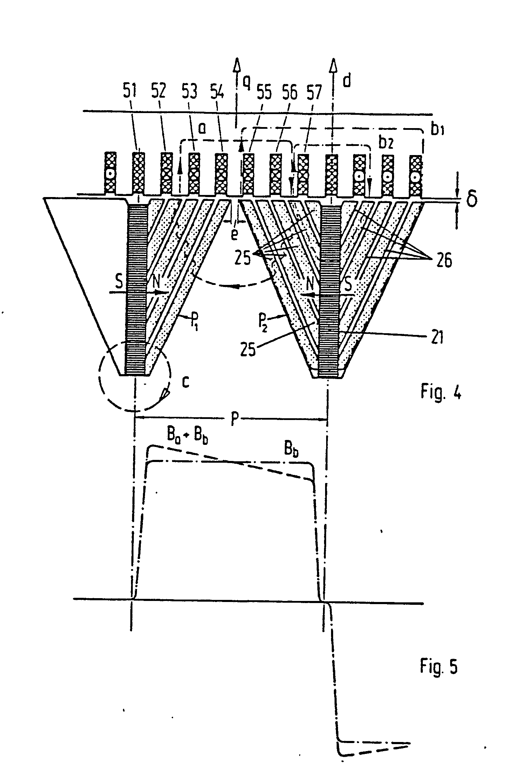

Eine wirksame Maßnahme zur Unterdrückung selbst lokaler Feldverzerrungen insbesondere auch bei großen Polteilungen und zugleich eine günstige Anordnung im Hinblick auf die ungestörte Feldausbildung im Nutzspalt δ ergibt sich bei einer Lamellierung der Teilpole P₁ und P₂ entsprechend der Ausführungsform nach Fig. 4. Die Verbindung zwischen den in ihrer Flußrichtung senkrecht zum Spalt e zwischen den Teilpolen stehenden Permanentmagneten 1 und dem Nutzspalt δ wird über eine lamellenartige Weicheisen-Polanordnung 25 mit dazwischenliegenden nichtmagnetischen Räumen 26 erreicht. Die Zwischenräume können dabei mit festem Material (z. B. Kunststoff oder unmagnetischen Metallen) gefüllt sein, das in der Zeichnung nicht dargestellt ist. Der Anteil des nichtmagnetischen Füllmaterials bestimmt die quer zu den Lamellen 25 wirksame magnetische Restleitfähigkeit. Diese liegt wesentlich niedriger als die Leitfähigkeit in Längsrichtung. Durch die gezeichnete Anordnung wird erreicht, daß jeder Zahn des entsprechend den Ausführungsformen nach Fig. 1 und 2 ausgebildeten Stators oder Ankers zwischen den Magneten mit annähernd gleicher Flußdichte versorgt wird. Im gesamten Polbereich tritt damit entsprechend dem Diagramm nach Fig. 5 eine konstante Induktion $B_b$ auf. Örtliche Schwankungen als Folge der gezeichneten offenen Nuten sind nicht dargestellt.

Um Sättigungseinflüsse zu vermeiden, ist davon auszugehen, daß die Summe der Lamellenstärken mindestens der Summe der Zahnstärken entsprechen sollte. Wie Fig. 4 erkennen läßt, entsteht nun für Feldlinien der Form a dadurch ein erhöhter Widerstsnd, daß mehrere Schlitze 26 und der verhältnismäßig große Spalt e in Polmitte überbrückt werden müssen. Damit wird der bei gegebener Durchflutung der Feldlinie a zuzuordnende Flußanteil sehr viel kleiner als bei der bekannten Ausführungsform nach Fig. 2. Die Flußdichte $B_a$, die sich dem Leerlauffeld überlagert, fällt selbst im Vergleich zur Flachanordnung (Fig. 1) gering aus. Das resultierende Feld im Luftspalt weicht selbst bei großen Ankerströmen nur wenig von der Form des Leerlauffeldes $B_b$ ab.

Mit der lamellierten Ausführung vom Nutzspalt weg konvergierender, insbesondere dreieckförmiger Teilpole kann ohne Beeinträchtigung des Leerlauffeldes eine sehr weitgehende Ankerfeldunterdrückung erreicht werden. Die Kraftdichte (Kraft je Flächeneinheit) erreicht einen größeren Wert als bei Maschinen, die etwa nach Fig. 2 ausgebildet sind.

Wie man aus dem Vergleich von Fig. 4 mit Fig. 2 erkennt, ist infolge der Schlitze 26 zwischen den Lamellen 25 auch eine Schwächung magnetischer Teilflüsse auf Feldbahnen der Form c (Streuflußanteil) gegeben. Nur ein sehr geringer Teil des Permanentmagneten dient somit der Erzeugung des Streuflusses; der weitaus größte Teil ist der Erregung des Nutzflusses vorbehalten.

Die vollständige Vermeidung von Streuflüssen entsprechend der Feldlinie c gelingt bei doppelseitigen symmetrischen Anordnungen von Erregerteil und Stator. Diese doppelseitige Anordnung kann z. B. bei Axialfeldmaschinen verhältnismäßig einfach verwirklicht werden.

Grundsätzlich darf festgestellt werden, daß die beschriebene Erregeranordnung in Sammlerform mit lamellierten Dreieckpolen für Axialfeld- und Radialfeldanordnungen gleichermaßen geeignet ist.

Der magnetisch schlecht leitende Raum zwischen den Lamellen kann wie erwähnt durch mechanisch sehr widerstandsfähiges Material gefüllt werden, so daß der Lamellenverband eine feste Einheit bildet. Es lassen sich damit auch hohe Umfangsgeschwindigkeiten beherrschen. Eine Sicherung der Permanentmagnete durch ein keilförmiges Abschlußelement erscheint bei hohen Umfangsgeschwindigkeiten zweckmäßig. Die Weicheisenlamellen 25 lassen sich aus magnetisch gut leitendem Stahl oder auch aus einigen Schichten Dynamoblech herstellen. Um eine geringe Beeinträchtigung des Nutzspaltfeldes $B_b$ zu erzielen, empfiehlt sich eine verhältnismäßig feine Unterteilung. Hierbei spielt die Schlitzbreite im Verhältnis zum Nutzspalt eine Rolle. Auch die möglichst günstige Verwendung des Magnetmaterials spricht für die Anordnung einer kleinen Lamellenteilung. Größere Schlitze bedingen eine Feldlinienverformung bzw. -verlängerung innerhalb des Magnetmaterials 21, was gleichbedeutend mit einem vergrößerten magnetischen Widerstand ist.

Die verhältnismäßig feine Lamellierung erweist sich zusätzlich günstig im Hinblick auf die Unterdrückung von Wirbelstromverlusten, die nahe der Oberfläche als Folge der durch die Nutöffnungen bewirkten Feldschwankungen entstehen. Die Verwendung von Dynamoblechen für die Lamellen 25 ergibt ein Minimum an zusätzlichen Oberflächenverlusten. Sie können in diesem Fall als praktisch vernachlässigbar angesehen werden.

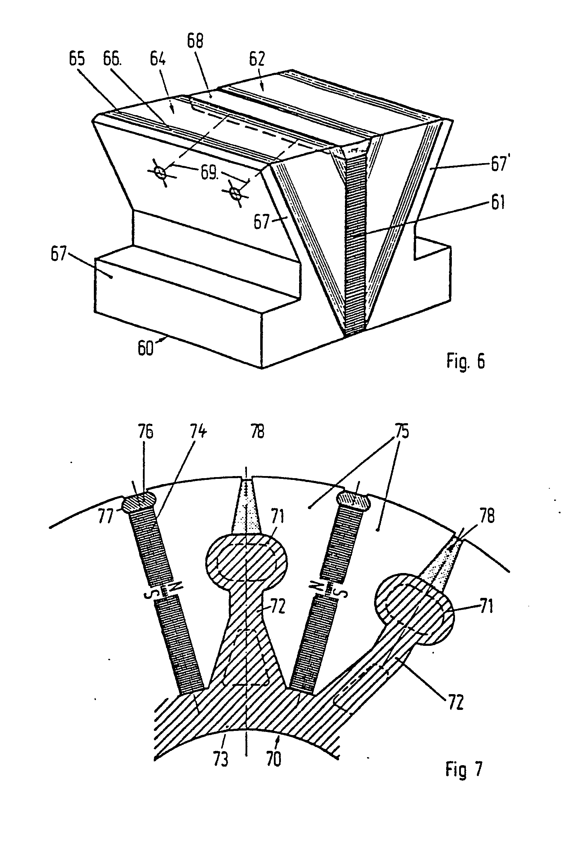

In Fig. 6 ist ein lamelliertes Polelement mit den Teilpolen 62, 64 benachbarter Pole mit dazwischen eingeschlossenem Permanentmagneten 61 dargestellt. Die geschichteten Weicheisenteilpole mit in axialer Richtung verlaufenden Lamellen 65 und Zwischenlagen 66 schließen an die Permanentmagnete 61 an. Nichtmagnetische Befestigungselemente 67, 67' dienen zur Befestigung des Polelementes auf einer nicht gezeichneten Tragstruktur, beispielsweise Rotorstruktur, die ebenfalls aus nichtmagnetischem Material gefertigt ist. Es kann zweckmäßig sein, durch einen nichtmagnetischen Keil 68 die Permanentmagnete 61 und die Teilpole 62 und 64 zu sichern. Der Keil kann beispielsweise durch Schrauben 69 gehaltert sein, die durch Stützwände 67' der Befestigungselemente hindurchgreifen und/oder eingeklebt sind.

Neben dieser für große Polteilungen und hohe Strombeläge zweckmäßigen Pollamellierung kann bei kleinen Polteilungen bereits eine einfache Polunterteilung durch einen einzigen Schlitz in Polmitte ausreichen. Fig. 7 zeigt einen Läuferquerschnitt dieser Konzeption. Im Hinblick auf den Stand der Technik wird für diese Ausführungsform jedoch kein Schutz begehrt. Die Pollamellen 75 lassen sich hierbei parallel zur Querschnittsebene des Rotors 70 anordnen. Als Befestigungselemente dienen hier mit einer kopfartigen Erweiterung 71 versehene Zähne 72, die am Rotorkörper 73 angeformt oder befestigt sind. Der Rotorkörper 73 und die Zähne sind aus nichtmagnetischem Material gefertigt und lassen hohe Umfangsgeschwindigkeiten zu. Die Permanentmagnete 74 werden durch Keile 76 gesichert, die in Nuten 77 in den angrenzenden Seiten der Teilpole liegen. Die Spalte zwischen den Teilpolen 75 radial außerhalb der Zahnköpfe 71 sind mit magnetisch schlecht leitendem Material 78 gefüllt.

Abgesehen vom Maschinenentwurf ergeben sich auch Vorteile für den Frequenzumrichter. Der die Maschine speisende Wechselrichter kann bei geringer Ankerrückwirkung, d. h. kleinem $x_q$ entsprechend Fig. 3 (ausgezogenes Diagramm) mit verhältnismäßig kleiner Scheinleistung konzipiert werden. Die dem Produkt aus maximal auftretender Spannung und größtem Strom entsprechend auszulegenden Leistungshalbleiter sind somit kostengünstiger als jene der Maschinenformen nach Fig. 2 und 1. Die stark reduzierte Felddeformation als Folge der Ankerströme wirkt sich günstig auf die Kommutierung aus. Sie hat weiterhin einen vorteilhaften Einfluß auf die maximal notwendige Taktfrequenz.

In Fig. 4 ist als Ankerwicklung eine Vielphasenwicklung mit sieben Phasen 51 - 57 (unabhängigen Wicklungselementen) vorgesehen. Sie führt bei gleichphasigen Strömen in z. B. sechs von sieben Strängen zu einer sehr hohen Kraftdichte. Bei einer annähernd rechteckförmigen magnetischen Flußdichte im Polbereich entsprechend Fig. 5 ist die günstigste Stromverteilung zur Erzielung großer Kräfte bei maximalem Wirkungsgrad ein über die Polteilung ebenfalls konstant angenommener Verlauf der Stromverteilung. Dies setzt im allgemeinen voneinander unabhängige Ströme in den einzelnen Phasen voraus. Durch das Vielphasenkonzept lassen sich auch höhere Bauteilausnützungen für den Wechselrichter als etwa bei Dreiphasen-Anordnungen erreichen, das sich die Anzahl der stromführenden Halbleiterschalter erhöht.

Um eine besonders verlustarme Energieumwandlung und gleichzeitig eine hohe Bauteilausnützung bei Maschine und Wechselrichter zu erzielen, erweist sich somit eine größere Phasenzahl als drei als besonders günstig. Darüber hinaus können die ungeraden Phasenzahlen von fünf bzw. sieben aufgrund einer günstigeren Betriebssymmetrie für den Aufbau der Schaltung für Maschinenwicklung und Wechselrichter einen kleineren Bauteilaufwand zulassen als gerade Phasenzahlen.

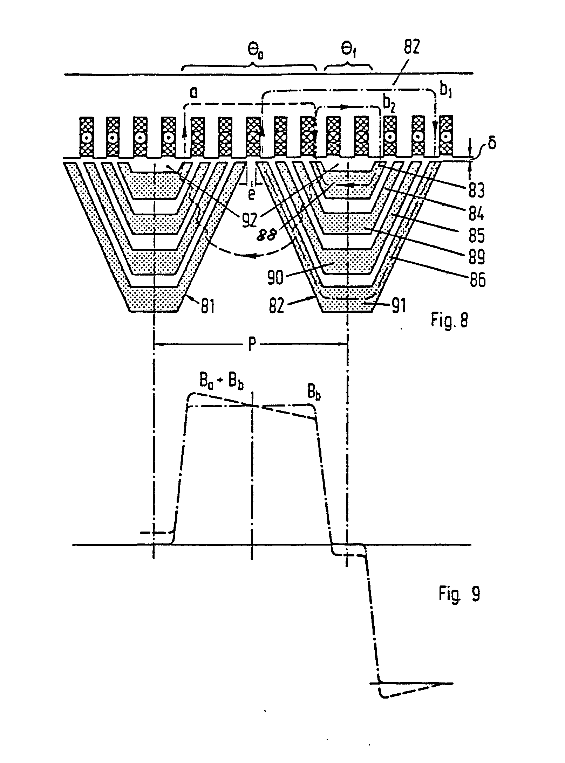

Sind die lamellierten dreieckförmigen Teilpole in ihrem mittleren Bereich miteinander magnetisch leitfähig verbunden, also dort, wo bei den Ausführungsformen nach den Fig. 4 - 7 der Permanentmagnet angeordnet ist, so entsteht ein magnetisch passiver Rotor entsprechend Fig. 8. Auch für diese Ausführungsform wird kein eigenes Schutz beansprucht. Die Lamellen 83, 84, 85 und 86 der Teilpole 81, 82 konvergieren auch hier. Zwischen ihren Enden sind Stege 88, 89, 90 und 91 angeordnet, die sich im wesentlichen parallel zum Nutzspalt δ erstrecken und mit den Lamellen aus einem Stück bestehen können. Der Steg 88 der Lamellen 83 ist mit einem Rücksprung 92 ausgebildet, durch den zwischen den Teilpolen eine Lücke gebildet wird, deren Breite wenigstens einer Nutteilung des Stators 82 entspricht. Beim Ausführungsbeispiel beträgt die Breite der Lücke zwei Nutteilungen. Die Breite der Lücke der Polelemente bestimmt über die Stromsumme der Ankerspulen ($\theta_f$), die für die Erregung des magnetischen Feldes wirksam sind, die Felddichte im Polbereich. Wird wieder eine Vielphasenwicklung wie nach Fig. 4 angenommen, so lassen sich die das Feld und die Ankerströme im Polbereich bestimmenden Spulenströme getrennt einstellen. Sie können durch Schalteingriffe in den jeweiligen Wechselrichterphasen beeinflußt werden. Dieses Verfahren wird mit "Stromorientierung" bezeichnet.

Die magnetische Flußdichte, die den Feldlinien b1 und b2 entspricht, wird durch die der Lücke zugehörigen Spulenströme (z. B. zwei) der Durchflutung $\theta_f$ hervorgerufen. Das magnetische Feld ist durch die gewählte Polgeometrie praktisch wieder gleichmäßig über die gesamte Polbreite verteilt. Mit elektrischer Erregung vom Anker aus lassen sich unter diesen Voraussetzungen ebenfalls hohe Flußdichten im Polbereich erzielen. Durch die lamellierte Polanordnung kann die Feldverformung durch die Ankerströme gegenüber bekannten Lösungen stark zurückgedrängt werden. Fig. 9 zeigt das Leerlauffeld $B_b$ erregt von den Spulen über der Lücke 92 und dss durch die Anteile aller Spulen $\theta_f + \theta_a$ erzeugte resultierende Gesamtfeld.

Die Verkleinerung der Feldverzerrung ist bei Reluktanzmaschinen von ähnlicher Bedeutung wie im Falle der permanenterregten Synchronmaschinen nach Fig. 4. Durch kleinere Ankerrückwirkung lassen sich höhere Kraftdichten bei gegebenem Strom und höheren Bauteilausnutzungen beim Wechselrichter sowie ein günstigeres Kommutierungsverhalten erzielen.

Die wechselrichtergespeiste Reluktanzmaschine erreicht unter den genannten Voraussetzungen ähnlich hohe Kraftdichten wie permanenterregte Maschinen. Der Wegfall der

Permanentmagnete bedeutet eine Kostenersparnis und eine Vereinfachung der Maschinenherstellung. Es kommt hinzu, daß die Stellbarkeit der Erregung, wie sie bei Vielphasenwicklungen mit unabhängig voneinander gespeisten Strängen besteht, beachtliche betriebliche Vorteile bietet. Das Stell- und Regelverhalten einer Reluktanzmaschine dieses Typs ähnelt dem Verhalten einer im Feld- und Ankerstrom getrennt stellbaren (fremderregten) Gleichstrommaschine.

Für sicherheitsempfindliche Anordnungen kann die über den Spulenstrom vorzunehmende Entregung der Maschine ein sehr positives Merkmal sein. Es lassen sich hier bei entsprechender Wicklungsaufteilung auch Teilbereiche der Maschine im Störungsfall abschalten, während ungestörte Sektoren in Betrieb bleiben.

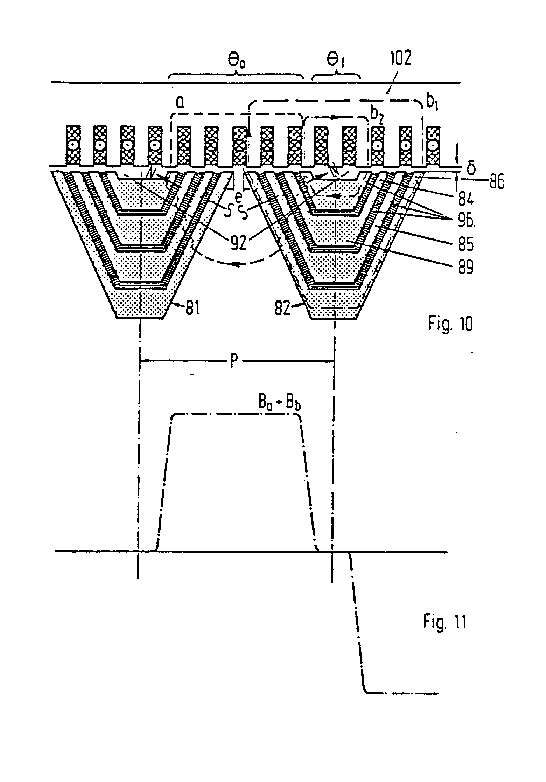

Für Anwendungen mit besonders hohen Ansprüchen im Hinblick auf Wirkungsgrad und Kraftdichte der Maschine ist es nun erfindungsgemäß möglich, eine weitere Verbesserung des Reluktanzkonzepts dadurch zu erzielen, daß mit Hilfe von Permanentmagneten das Ankerfeld leistungslos kompensiert wird. Auch hierbei ist zur Erzielung einer Feldentzerrung im gesamten Bereich des Pols davon auszugehen, daß lamellierte Polelemente entsprechend Fig. 8 existieren. Für gleiche Teile werden daher in Fig. 10 die gleichen Bezugszeichen verwendet wie in Fig. 8. Es ist auch in diesem Fall besonders günstig, die Lamellenteilung kleiner als die Nutteilung des Stators zu wählen. Zur Kompensation des auf Feldbahnen a von den Strömen des Ankers erzeugten Magnetfeldes werden Permanentmagnete 96 in den Schlitzen 86 der lamellierten Polelemente angewendet. Die Magnetisierungsrichtung verläuft quer zu den Schlitzen und ist in allen Schlitzen gleichgerichtet. Es zeigt sich, daß die Anwendung von billigen Ferrit-Magneten zur Kompensation von Ankerstrombelägen bis zu etwa 1200 A/cm ausreicht. Durch Verminderung der Schlitzbreite lassen sich mit demselben Magnetmaterial Feldentzerrungen auch bei kleineren Strombelägen vornehmen.

Mit Ferrit-Magnetmaterial können somit verhältnismäßig starke Ankerfelder kompensiert werden.

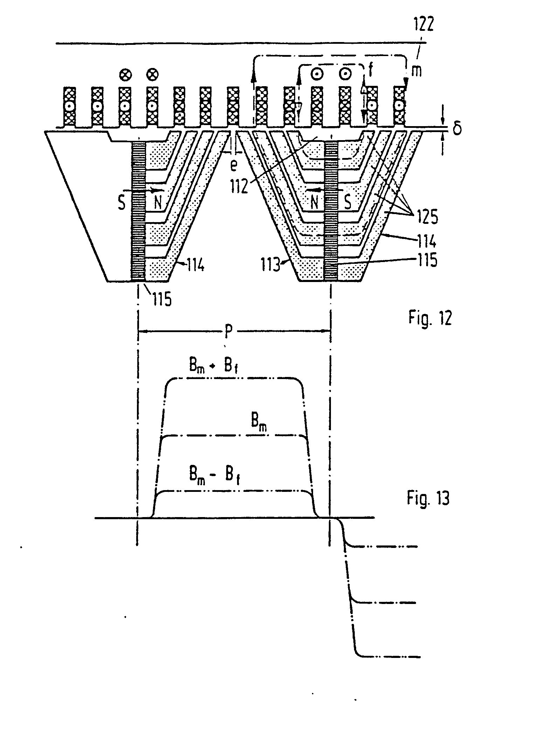

Fig. 11 gibt den Verlauf der Flußdichte unter Last an. Vermindert sich die Größe der Ströme in den Spulen, tritt im Vergleich zu Fig. 9 eine Feldverformung in umgekehrter Richtung auf. Hierbei kann aber davon ausgegangen werden, daß bei verkleinerter Umfangskraft die Nachteile der Feldverzerrung keine besondere Rolle mehr spielen. Die nun in umgekehrter Richtung auftretende Verformung des Feldverlaufs hat z. B. den Vorteil, daß der Kommutierungsvorgang beschleunigt abläuft. Das resultierende Feld längs der Feldlinie a verschwindet bei Nennlast (volle Kompensation).

Die oben beschriebene Ausführung der permanenterregten Pole und die Möglichkeit der Polerregung über den Anker mit Hilfe einer Vielphasenanordnung lassen sich kombinieren. Es läßt sich mit diesen Mitteln erreichen, daß für einen bestimmten Erregungsgrad (eine bestimmte Flußdichte des Leerlauffeldes) die Erregung ausschließlich leistungslos von den Permanentmagneten erzeugt wird, während höhere oder niedrigere Felddichten unter Zuhilfenahme der Ankererregung bereitgestellt werden. Dies entspricht dem für manche Anwendung bekannten Ablauf, bei dem Betriebszustände mit maximalem Feld und auch jene mit minimalem Feld nur kurzzeitig im Vergleich zu denen mit mittlerer Felddichte auftreten.

Fig. 12 zeigt eine Ausführungsform einer derartigen Maschine. Die Pole sind im wesentlichen entsprechend der Ausführung nach Fig. 10 ausgebildet. In der Mitte der in Achsrichtung lamellierten Teilpole bzw. der Stege zwischen den Teilpolen 113, 114 aus Weicheisen ist wie bei der Ausführung nach Fig. 4 ein entsprechend bemessener Permanentmagnet 115 angeordnet. Die Pollücke 112 ist hierbei ähnlich wie bei der reinen Reluktanzversion nach Fig. 8 und 10 so breit gestaltet, daß die notwendige Erregerdurchflutung $\theta_f$ zur Verstellung des Leerlauffeldes verfügbar ist. Da die vom Permanentmagneten zu erzeugende Felddichte $B_m$ nun niedriger liegt als bei ausschließlicher Permanenterregung (Fig. 4), läßt sich die Höhe des Permanentmagneten reduzieren. Sie kann z. B. bei Verwendung von Seltenerden-Kobaltmagneten noch unter 1 cm liegen, wenn $B_m$-Werte zwischen 0,4 und 0,5 T erreicht werden sollen. Berücksichtigt man das Flächenverhältnis von Magnet- und Polfläche von etwa 2, so bedeutet der Magnet mit einer Höhe von 0,8 cm eine fiktive Luftspaltvergrößerung von etwa 0,2 cm. Es wird somit deutlich, daß mit einer begrenzten Durchflutung $\theta_f$ Flußdichten $B_f$ von 0,2 bis 0,3 T erreichbar sind. Magnete mit noch höheren $B_r$-Werten verbessern das Konzept.

In Fig. 13 ist der Verlauf der Flußdichte für drei Fälle dargestellt.

$B_m$ bezeichnet in Fig. 13 den Feldverlauf ohne Ankererregung. $B_m + B_f$ gibt den erzielbaren Maximalwert an. Hierbei unterstützen sich die Wirkungen der Permanentmagnete und die der Ankererregung. $B_m - B_f$ kennzeichnet den Minimalwert der Flußdichte. Die Ankererregung wirkt der Permanenterregung entgegen. Abhängig vom Magnetmaterial ist darauf zu achten, daß durch die Gegenerregung Zustände irreversibler Magnetisierung im Magnetmaterial vermieden werden. Innerhalb der beschriebenen Grenzen der Flußdichte ist deren Einstellung mit Hilfe der Ankerströme stufenlos möglich. Das Konzept der Mischerregung ist im Vergleich zu anderen Lösungen dann besonders vorteilhaft, wenn die Dicke der Permanentmagnete gering angesetzt werden soll.

**Patentansprüche**

1. Elektrischer Antrieb mit einem stationären Teil mit einer Mehrphasenwicklung und einem vom stationären Teil über einen Nutzspalt (δ) getrennten beweglichen Teil mit daran ausgebildeten lamellierten Polen (P), zwischen denen mit den Polen magnetisch leitend verbunden Permanentmagnete (21) angeordnet sind, deren Flußrichtung im wesentlichen parallel zum Nutzspalt (δ) verläuft, wobei die Flußrichtung aufeinanderfolgender Permanentmagnete entgegengesetzt gerichtet ist, dadurch gekennzeichnet, daß die Pole (P) des beweglichen Teiles benachbarte Teilpole (P$_1$, P$_2$) aufweisen, zwischen denen ein magnetisch nicht leitender Trennspalt (e) vorgesehen ist, der größer ist als der Nutzspalt (δ), daß die Teilpole (P$_1$, P$_2$) quer zur Bewegungsrichtung in eine Mehrzahl von Pollamellen (126; 83 - 86; 125) unterteilt sind, die durch nichtmagnetische Räume getrennt sind, und daß die Teilpole vom Nutzspalt ausgehend zu den angrenzenden Permanentmagneten hin geneigt ausgebildet sind.

2. Elektrischer Antrieb nach Anspruch 1, dadurch gekennzeichnet, daß im Bereich zwischen zwei Polen an den Nutzspalt angrenzend jeweils ein eine Lücke bildender Rücksprung (Fig. 12: 112) vorgesehen ist, dessen Breite mindestens einer Nutteilung des stationären Teils (122) entspricht.

3. Elektrischer Antrieb nach Anspruch 1, dadurch gekennzeichnet, daß die nichtmagnetischen Räume mit einem mechanisch widerstandsfähigen und magnetisch schlecht leitenden Material gefüllt sind.

4. Elektrischer Antrieb nach Anspruch 1, dadurch gekennzeichnet, daß die Pollamellen in Bewegungsrichtung des beweglichen Teils geschichtete Bleche aufweisen.

5. Elektrische Reluktanzmaschine bestehend aus einem feststehenden Teil (Stator) mit einer Mehrphasenwicklung und einem beweglichen Teil (Rotor), die beide durch einen Nutzspalt (δ) getrennt sind, innerhalb dessen ein magnetisches Feld wirksam ist, bei denen im beweglichen Teil dieses Feld in einer lamellierten Weicheisenanordnung mit nichtmagnetischen Zwischenräumen verläuft, deren Lamellen sich in der Richtung der stromführenden Leiter erstrecken und die jeweils magnetische verbundene Teilpole benachbarter Pole bilden, wobei die Teilpole durch einen magnetisch nicht leitenden Trennspalt (e), der größer ist als der Nutzspalt, voneinander getrennt sind und die Teilpole vom Nutzspalt ausgehend divergieren, und bei der die Weicheisenanordnung mit Permanentmagneten versehen ist, dadurch gekennzeichnet, daß die Permanentmagnete (96) in Zwischenräumen zwischen den Weicheisenlamellen (84, 85, 86, 89) angeordnet sind und daß die Magnetisierungsrichtung (N-S) der Permanentmagnete senkrecht zur Lamellenebene verläuft.

6. Elektrische Maschine nach einem der vorhergehenden Ansprüche, dadurch gekennzeichnet, daß die Breite der nichtmagnetischen Zwischenräume ungefähr der Breite des Nutzspaltes entspricht.

7. Elektrische Maschine nach einem der vorhergehenden Ansprüche, dadurch gekennzeichnet, daß der stationäre Teil (22, 82, 102, 122) mit einer Vielphasenwicklung (51 - 57) mit einer Phasenzahl größer als drei je Polteilung (P) des beweglichen Teiles versehen ist.

8. Elektrische Maschine nach Anspruch 7, dadurch gekennzeichnet, daß die Spulen (51 - 57) der Statorwicklung mit ihren Anschlüssen herausgeführt und die Ströme in den Spulen einzeln einstellbar sind.

9. Elektrische Maschine nach Anspruch 7 oder 8, dadurch gekennzeichnet, daß die Phasenzahl und mit ihr die Nutenzahl je Polteilung ungerade, und zwar 5 oder 7 ist.

**Claims**

1. Electric drive comprising a stationary part having a multi-phase winding and a moving part, which is separated from the stationary part via a useful gap (δ), with laminated poles (P) which are formed on the moving part and between which permanent magnets (21) are arranged which are magnetically conductively connected to the poles and the flux direction of which essentially extends parallel to the useful gap (δ), the flux direction of successive permanent magnets being oppositely directed, characterized in that the poles (P) of the moving part exhibit adjacent part-poles (P$_1$, P$_2$) between which a magnetically non-conducting separating gap (e) is provided which is wider than the useful gap (δ), that the part-poles (P$_1$, P$_2$) are subdivided transversely to the direction of movement into a plurality of pole segments (126; 83 - 86; 125) which are separated by non-magnetic spaces, and that the part-poles are constructed to be inclined starting from the useful gap towards the adjoining permanent magnets.

2. Electric drive according to Claim 1, characterized in that in the area between two poles, adjoining the useful gap, a recess (Fig. 12: 112) forming a gap is in each case provided, the width of which corresponds to at least one slot division of the stationary part (122).

3. Electric drive according to Claim 1, characterized in that the non-magnetic spaces are filled with a mechanically resistive material of poor magnetic conductivity.

4. Electric drive according to Claim 1, characterized in that the pole segments exhibit laminations stacked in the direction of movement of the moving part.

5. Electric reluctance machine consisting of a stationary part (stator) having a multiphase winding and a moving part (rotor), both of which are separated by a useful gap (δ) within which a

magnetic field is active, in which in the moving part this field extends in a laminated soft-iron arrangement with non-magnetic intermediate spaces, the segments of which extend in the direction of the current-conducting conductors and which in each case form magnetic connected part-poles of adjacent poles, the part-poles being separated from one another by a magnetically non-cnducting separating gap (e) which is wider than the useful gap and the part-poles diverge starting from the useful gap, and in which the soft-iron arrangement is provided with permanent magnets, characterized in that the permanent magnets (96) are arranged in intermediate spaces between the soft-iron segments (84, 85, 86, 89) and that the direction of magnetization (N-S) of the permanent magnets extends perpendicularly to the segment plane.

6. Electric machine according to one of the preceding Claims, characterized in that the width of the non-magnetic intermediate spaces approximately corresponds to the width of the useful gap.

7. Electric machine according to one of the preceding Claims, characterized in that the stationary part (22, 82, 102, 122) is provided uith a multi-phase winding (51 - 57) having a number of phases greater than three per pole division (P) of the moving part.

8. Electric machine according to Claim 7, characterized in that the coils (51 - 57) of the stator winding are brought out with their connections and the currents in the coils can be individually adjusted.

9. Electric machine according to Claim 7 or 8, characterized in that the number of phases, and with it the number of slots per pole division, is odd, namely 5 or 7.

**Revendications**

1. Entraînement électrique avec une partie stationnaire avec un enroulement polyphasé et une partie mobile séparée de la partie stationnaire par un entrefer utile (δ) avec des pôles feuilletés (P) réalisés sur celle-ci, entre lesquels sont disposés des aimants permanents (21) reliés de façon magnétiquement conductrice aux pôles, dont la direction de flux s'étend sensiblement parallèlement à l'entrefer utile (δ), la direction de flux d'aimants permanents successifs étant dirigée de façon opposée, caractérisé en ce que les pôles (P) de la partie mobile présentent des pôles partiels ($P_1$, $P_2$) adjacents entre lesquels est prévu un entrefer de séparation (e) magnétiquement non conducteur, qui est plus grand que l'entrefer utile (δ), en ce que les pôles partiels ($P_1$, $P_2$) sont subdivisés transversalement au sens de déplacement en un ensemble de lamelles polaires (126; 83 - 86; 125), qui sont séparées par des espaces non magnétiques, et en ce que les pôles partiels sont réalisés inclinés en partant de l'entrefer utile vers les aimants permanents adjacents.

2. Entraînement électrique selon la revendication 1, caractérisé en ce que dans la zone entre deux pôles, adjacent à l'entrefer utile, est prévu un retrait (Fig. 12: 112) formant une lacune, dont la largeur correspond au moins à un pas d'encoche de la partie stationnaire (122).

3. Entraînement électrique selon la revendication 1, caractérisé en ce que les espaces non magnétiques sont remplis d'un matériau mécaniquement résistant et magnétiquement mauvais conducteur.

4. Entraînement électrique selon la revendication 1, caractérisé en ce que les lamelles polaires comportent, des tôles empilées dans le sens de déplacement de la partie mobile.

5. Machine à réluctance électrique se composant d'une partie fixe (stator) avec un enroulement polyphasé et d'une partie mobile (rotor), les deux étant séparées par un entrefer utile (δ), à l'intérieur duquel s'exerce un champ magnétique, dans lesquelles dans la partie mobile ce champ s'étend dans un ensemble en fer doux feuilleté avec des espaces intermédiaires non magnétiques, dont les lamelles s'étendent dans la direction des conducteurs de courant et forment les pôles partiels réunis magnétiquement de pôles adjacents, les pôles partiels étant séparés les uns des autres par un entrefer de séparation (e) magnétiquement non conducteur, qui est plus grand que l'entrefer utile et les pôles partiels divergent à partir de l'entrefer utile, et dans laquelle l'ensemble en fer doux est muni d'aimants permanents, caractérisée en ce que les aimants permanents (96) sont disposés dans des espaces intermédiaires entre les lamelles en fer doux (84, 85, 86, 89) et en ce que le sens de magnétisation (N-S) des aimants permanents s'étend perpendiculairement au plan des lamelles.

6. Machine électrique selon l'une quelconque des revendications précédentes, caractérisée en ce que la largeur des espaces intermédiaires non magnétiques correspond à peu près à la largeur de l'entrefer utile.

7. Machine électrique selon l'une quelconque des revendications précédentes, caractérisée en ce que la partie stationnaire (22, 82, 102, 122) est munie d'un enroulement à phases multiples (51 - 57) avec un nombre de phases supérieur à trois pour chaque pas polaire (P) de la partie mobile.

8. Machine électrique selon la revendication 7, caractérisée en ce que les bobines (51 - 57) de l'enroulement statorique sont réalisées avec leurs connexions et les courants dans les bobines sont réglables séparément.

9. Machine électrique selon la revendication 7 ou la revendication 8, caracterisée en ce que le nombre de phases et avec lui le nombre d'encoches pour chaque pas polaire est impair, à savoir 5 ou 7.

Fig 1

Fig. 2

Fig. 3

Fig. 4

Fig. 5

Fig. 6

Fig 7

Fig. 8

Fig. 9

Fig. 10

Fig. 11

Fig. 12

Fig. 13